# FASCICULE DE BREVET EUROPEEN

(11) **EP 0 924 992 B1**
(45) Date de publication et mention de la délivrance du brevet: **24.10.2001**
(21) Numéro de dépôt: 97936717.4
(22) Date de dépôt: 31.07.1997
(51) Int. Cl.: A23J 1/00

(54) **PROCEDE ET INSTALLATION DE FABRICATION D'UN INGREDIENT ALIMENTAIRE CONSTITUE ESSENTIELLEMENT DE FIBRES PROTEIQUES MUSCULAIRES ET INGREDIENT ALIMENTAIRE OBTENU PAR CE PROCEDE**
VERFRAHREN UND VORRICHTUNG ZUR HERSTELLUNG VON IM WESENTLICHEN AUS MUSKELFASERPROTEINEN BESTEHENDEN NAHRUNGSZUSATZMITTEL UND SO ERHALTENE ZUSATZMITTEL
METHOD AND APPARATUS FOR PRODUCING A FOOD INGREDIENT ESSENTIALLY CONSISTING OF MUSCLE FIBRE PROTEINS, AND RESULTING INGREDIENT

(30) Priorité: 02.08.1996 FR 9609803
(43) Date de publication de la demande: 30.06.1999
(73) Titulaire: PROTIAL, 49071 Beaucouze (FR)
(72) Inventeur: ROUSSEL, Hervé, F-78730 St Arnoult en Yvelines (FR)
(74) Mandataire: Dawidowicz, Armand
(86) Numéro de dépôt international: FR9701429
(87) Numéro de publication internationale: WO9805217

(56) Documents cités:
- EP-A- 0 064 104
- DE-A- 4 417 730
- US-A- 5 384 149
- CHEMICAL ABSTRACTS, vol. 75, no. 25, 20 décembre 1971 Columbus, Ohio, US; abstract no. 150491, XP002016221 & S.UMEMOTO,K.KANNA: "gel components in fish muscle protein extracts.I. preliminary experiments on the properties of gel components" TOKAI REG. FISH. RES. LAB.,TOKYO, JAPAN,

## Description

L'invention concerne un nouveau procédé et une nouvelle installation de fabrication d'un ingrédient alimentaire naturel et gélifiant constitué de protéines de fibres musculaires de viande de bovins, d'ovins, de porcins ou de volailles (poulet, dinde, canard, lapin, ...), de chair musculaire de poissons, de crustacés, de mollusques ou de céphalopodes. L'invention concerne également les ingrédients alimentaires obtenus par ce procédé et les préparations alimentaires les contenant.

Ce nouvel ingrédient alimentaire peut se présenter sous diverses formes, le plus couramment humide (10 à 60 % de matière sèche), mais aussi déshydratée (85 à 100 % de matière sèche). Il peut aussi être mélangé à un support alimentaire, c'est à dire à un ingrédient alimentaire secondaire tel que les maltodextrines, l'amidon, etc. dans le but de faciliter son séchage (par atomisation par exemple) ou son usage culinaire (mouillabilité, dispersibilité, etc.). Ce mélange secondaire n'enlève rien au caractère original de l'invention. La stabilité à l'entreposage du nouvel ingrédient est assurée par congélation, séchage ou traitement thermique, et cela sans perte des propriétés gélifiantes et de rétention d'eau qui le caractérisent. Dans le cas d'une stabilisation par traitement thermique, un traitement UHT, c'est à dire un chauffage à forte température pendant une durée courte, est appliqué en continu directement lors de la fabrication de l'ingrédient de manière à assurer une pasteurisation ou une stérilisation dite "pratique". L'application de ce traitement thermique UHT parfaitement contrôlé en termes de température et de durée fait alors partie intégrante de la présente invention.

La chair de boeuf, de mouton, de porc, de volailles, mais aussi de poissons, de crustacés, de mollusques et de céphalopodes, est structurée autour de constituants biochimiques communs formant le muscle squelettique. Trois classes de protéines distinctes sont présentes dans ce muscle à des proportions variées : les protéines sarcoplasmiques solubles dans l'eau (environ 30 à 40 %) constituées essentiellement de l'hémoglobine, de la myoglobine et d'albumines, les protéines du tissu conjonctif insolubles dans l'eau (teneur variable selon le muscle, mais fréquemment de l'ordre de 10 à 20 %) constituées essentiellement du collagène et de l'élastine, et les protéines contractiles myofibrillaires insolubles dans l'eau et solubles en solutions salines (environ 50 %) constituées essentiellement de la myosine et de l'actine.

C'est la fraction contractile myofibrillaire qui est présente dans les fibres musculaires, et plus particulièrement la protéine de myosine, qui est l'agent gélifiant responsable des gels de viandes, de volailles et de produits de la mer (cas des gels de surimi, par exemple). Quand un muscle est malaxé en présence de sel, cette fraction est extraite partiellement et la solubilité protéique augmente. Quand le mélange salé est cuit, ces protéines se réorganisent en une matrice homogène et gélifiée capable de retenir fortement l'eau (propriété de rétention d'eau) et les matières grasses (propriété de rétention des matières grasses). Les protéines du tissu conjonctif sont également partie prenante du gel final, mais dans une moindre mesure et uniquement au refroidissement. Les protéines sarcoplasmiques sont souvent expurgées de la matrice et coagulent de façon hétérogène sous la forme d'une pâte protéique cuite assez molle et grisâtre.

La présente invention couvre la fabrication d'un nouvel ingrédient alimentaire dans lequel la fraction protéique myofibrillaire est prépondérante et non dénaturée. Dans cet ingrédient, les protéines myofibrillaires sont encore organisées sous forme de fibres musculaires partiellement déstructurées. Les protéines myofibrillaires ne sont par contre en aucun cas dissociées sous forme d'une solution protéique non organisée, solution quelquefois appelée « sol ». Elles se présentent sous forme de fibres musculaires partiellement intègres et, à ce titre, l'ingrédient protéique faisant l'objet de la présente invention peut être assimilé à un extrait de fibres musculaires.

Comme exposé précédemment, les protéines sarcoplasmiques possèdent de faibles propriétés gélifiantes. Dans une certaine mesure, elles gênent même l'expression complète des propriétés gélifiantes et du pouvoir de rétention d'eau et des matières grasses des protéines myofibrillaires. Pour produire un ingrédient alimentaire à base de protéines myofibrillaires, il convient alors d'écarter les protéines sarcoplasmiques. Pour cela, il existe deux voies scientifiques et technologiques possibles : l'extraction des protéines myofibrillaires ou l'extraction des protéines sarcoplasmiques.

La première voie est l'objet par exemple de la fabrication industrielle d'un produit appelé ISOPROM en Pologne (T. Trziszka et al., avril 1993). Lés auteurs utilisent de la viande de volaille séparée mécaniquement (VSM en français, MRM ou MDM en anglais). Cette viande issue des carcasses après découpe manuelle est grasse (environ 16 % de matières grasses) et colorée du fait de la présence importante de pigments sanguins. La première étape consiste à mélanger la VSM dans de l'eau douce contenant du sel de calcium (ratio eau / VSM = 4 ; teneur finale en chlorure de calcium = 1,5 %). Cette forte concentration saline a pour effet de mettre en solution les protéines myofibrillaires du muscle. Le mélange est ensuite centrifugé, ce qui a pour effet de séparer d'un coté le liquide contenant les protéines sarcoplasmiques et les protéines myofibrillaires, de l'autre coté une boue protéique humide contenant les protéines de soutien (collagène principalement). La phase liquide est ensuite diluée une dizaine de fois dans des cuves coniques pour réduire la concentration saline et faire précipiter les protéines myofibrillaires. Celles-ci, devenues de nouveau insolubles, sont récupérées par une nouvelle centrifugation à l'aide d'un séparateur centrifuge à assiettes. Les protéines sarcoplasmiques solubles sont alors éliminées. L'ISOPROM se présente finalement sous la forme d'une pâte beige clair très humide (88 - 90 % d'humidité) constituée essentiellement de protéines myofibrillaires. A ce titre, il peut être considéré comme un véritable isolat de protéines myofibrillaires purifiées (environ 90 % des protéines totales). Les fibres musculaires ne sont plus visibles par observation microscopique. L'ISOPROM peut être alors congelé ou séché et il possède de bonnes propriétés fonctionnelles, notamment gélifiantes. A cause des méthodes centrifuges utilisées, il est également dégraissé (jusqu'à moins de 2 % de matières grasses) et sa couleur est agréable (élimination des pigments sanguins : hémoglobine et myoglobine). Cette voie technologique est intéressante pour obtenir des protéines myofibrillaires bien purifiées. Elle a le défaut de posséder un rendement technique faible, de l'ordre de 50 % base humide, mais avec une teneur en matière sèche de 10 - 12 % seulement. Une grosse partie des protéines myofibrillaires est perdue avec les protéines de soutien. Cette voie technologique correspond en fait à ce qui est couramment réalisé par les chercheurs en laboratoire pour l'extraction et la purification des protéines myofibrillaires. A ce titre, on peut mentionner les travaux de l'équipe de l'INRA de Theix en France sur les propriétés gélifiantes de protéines myofibrillaires bovines extraites également par voie saline (CULIOLI et al., V.P.C., 11, 313-314).

La seconde voie technologique consiste à éliminer les protéines sarcoplasmiques par extraction à l'eau, profitant ainsi de leur propriété de solubilité dans ce solvant. Le procédé le plus connu utilisant ce principe est le procédé de fabrication de surimi à partir de muscle de poisson. En effet, connue depuis le 15^{ème} siècle au Japon, la technique consistant à tremper un hachis de filets de poisson dans de l'eau douce froide (moins de 10°C) s'est développée et industrialisée jusqu'à nos jours. La production mondiale de surimi de poisson atteint aujourd'hui des volumes annuels de l'ordre de 700 000 tonnes. La fabrication du surimi ne consiste pas seulement en une extraction dans l'eau des protéines sarcoplasmiques. Elle correspond également à l'élimination des protéines du tissu conjonctif (ici des débris d'arêtes et de peau) par une opération dite de « raffinage » (opération identique au tamisage dans l'industrie des fruits rouges) et combine en outre une innovation majeure qui consiste à cryoprotéger les protéines myofibrillaires par l'addition de sucres et de polyphosphates. Néanmoins, hormis ces deux points essentiels, les cycles de lavage à l'eau froide de la chair de poisson suivis d'essorages rotatifs (normalement 2 à 3 cycles consécutifs) permettent une élimination quasi-totale des protéines sarcoplasmiques. Avant addition des agents cryoprotecteurs, cette pâte protéique lavée et « raffinée » est en fait également un concentré humide de protéines myofibrillaires (environ 80 % des protéines totales), mais la structure fibreuse du muscle n'existe plus. Les fibres musculaires ont été déstructurées lors de l'opération de raffinage. A mentionner néanmoins que le surimi de poisson n'existe sous cette appellation que s'il combine les cycles de lavages / essorages, le raffinage et l'addition d'agents cryoprotecteurs avant congélation (Surimi Technology, Marcel Dekker Inc., 1992, 528 p.).

Divers autres traitements des co-produits de viandes ou poissons peuvent être signalés à ce niveau. Il s'agit par exemple des procédés continus de dégraissage des viandes, et notamment du dégraissage des VSM par méthode centrifuge. Ces techniques ont été développées à des fins variées, allant de la fabrication de farine de viande pour l'alimentation animale (US-A-4.137.335) à la production de viandes dégraissées à usage diététique, pauvres en cholestérol (US-A-4.980.185). La séparation des graisses de la viande peut être obtenue selon trois voies distinctes. La première consiste en une séparation mécanique par pressage, épluchage ou grattage des morceaux gras (US-A-4.776.063 ; US-A-3.780.191 ; US-A-3.685.095 et US-A-3.748.148 ; FR-A-2.187.229). La deuxième met en oeuvre des traitements physiques comme la chaleur, les rayonnements ou des gaz (US-A-4.778.682 ; US-A-3.687.819 ; US-A-3.780.075 et US-A-3.532.593). Enfin, la troisième correspond à l'action de solvants chimiques pour l'extraction des graisses (US-A-3.794.743 et US-A-3.532.593).

Le brevet US-A-3.177.080 décrit un système permettant de dégraisser une viande de boeuf ou de porc trop grasse par centrifugation après cuisson et déstructuration mécanique. La fraction viande récupérée a subi un traitement thermique sévère et long à la vapeur provoquant la dénaturation totale des protéines du muscle. Celles-ci ne possèdent plus de propriétés fonctionnelles alimentaires exploitables. Un cas particulier est celui du brevet US-A-5.382.444 déposé par la société Oscar Major Food Corp.. Ici, le procédé développé est similaire au précédent, mais les températures employées sont faibles et n'entraînent a priori pas de dénaturation totale des protéines de viande. L'auteur indique que les viandes de boeuf, de porc ou de dinde, dégraissées ainsi à basse température, contiennent de l'ordre de 2 à 8 % de matières grasses, 17 à 22 % de protéines et une humidité de l'ordre de 72 à 75.%. Il est bien mentionné que le procédé ne correspond pas à un fractionnement des différentes classes de protéines musculaires : les protéines sarcoplasmiques, collagéniques et myofibrillaires sont contenues dans leur intégralité dans la viande dégraissée selon ce brevet. Comme il est énoncé dans ce texte, les propriétés fonctionnelles de cette viande dégraissée sont supérieures à celle de la même viande non dégraissée. Ceci est logique dans la mesure où il est connu que les matières grasses, tout comme les protéines sarcoplasmiques, gênent la complète gélification des protéines myofibrillaires.

La présente invention vise à obtenir de manière industrielle, c'est-à-dire par un procédé de fabrication en continu, un nouvel ingrédient alimentaire constitué essentiellement de fibres protéiques animales non déstructurées au cours du processus de fabrication, en particulier d'une proportion élevée (de l'ordre de 70 à 80 %) de protéines myofibrillaires insolubles dans l'eau.

A cet effet, selon une première caractéristique, l'invention a pour objet un procédé de fabrication d'un ingrédient alimentaire naturel et gélifiant constitué de protéines de fibres musculaires à base de chair musculaire carnée ou de chair musculaire de poissons, crustacés, mollusques ou céphalopodes, selon la revendication 1.

Selon une forme préférée de mise en oeuvre du procédé selon l'invention, on ajuste en outre la température du mélangé entre les étapes b) et c) à une température prédéterminée (T2) dans la plage de 65°C à 130°C et on maintient le mélange à ladite température pendant une durée de temps suffisante pour correspondre à un traitement thermique UHT de pasteurisation ou de stérilisation.

Selon une forme d'exécution de l'invention, on introduit dans le mélange de chair et d'eau au moins un additif destiné à favoriser l'opération de fractionnement et/ou améliorer les propriétés fonctionnelles et/ou nutritionnelles de l'ingrédient alimentaire.

On peut en outre mettre en oeuvre, soit avant l'opération de fractionnement dans le cas d'un procédé par voie humide, soit sur le produit fini après fractionnement, une opération de raffinage par tamisage.

De plus, on peut prévoir que le procédé est précédé ou suivi d'au moins un traitement technologique complémentaire connu en soi destiné à modifier les propriétés fonctionnelles et/ou nutritionnelles de l'ingrédient, en particulier des traitements successifs de lavages et d'essorages.

L'invention a également pour objet une installation pour la mise en oeuvre du procédé précédent, ainsi que les ingrédients alimentaires obtenus par ce procédé et les préparations alimentaires contenant de tels ingrédients.

L'invention sera bien comprise à la lecture de la description suivante et des exemples de réalisation, en référence au dessin annexé dans lequel :
la figure 1 est un schéma illustrant un exemple de mise en oeuvre du procédé de l'invention et
la figure 2 représente schématiquement une installation pour la mise en oeuvre du procédé.

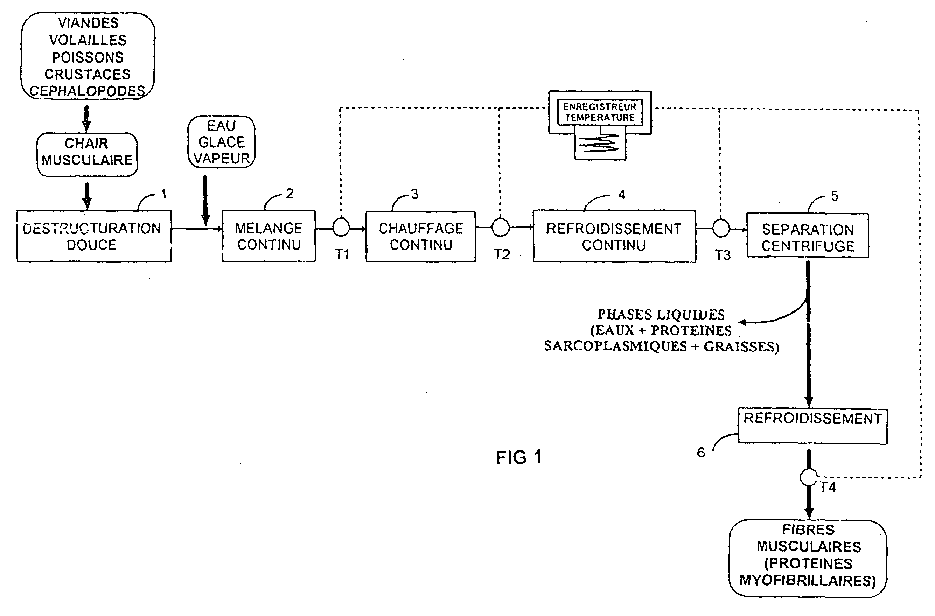

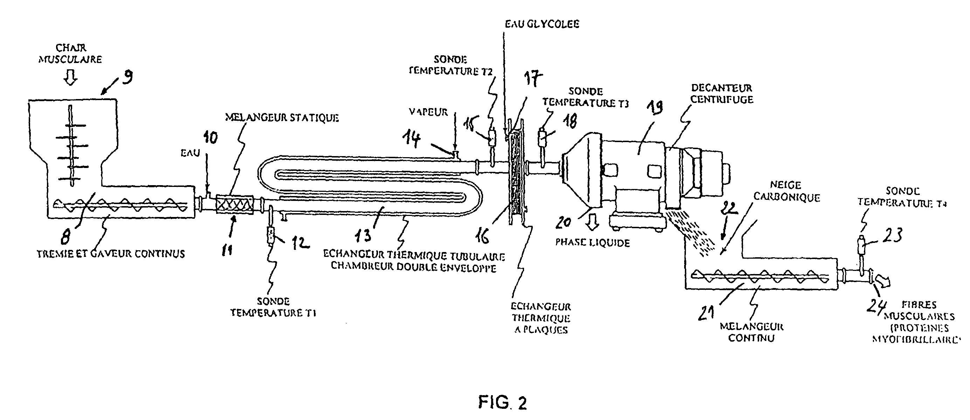

Le procédé et produit objets de la présente invention se distinguent des procédés et produits précédents du fait que l'opération technologique de fabrication est orientée sur l'élimination seulement partielle de la fraction protéique sarcoplasmique et d'une partie des graisses, et ceci sans destruction complète des fibres musculaires. Les figures 1 et 2 présentent une vue schématique du procédé et un exemple du dispositif pouvant être mis en oeuvre, respectivement. Les tableaux 1 et 2 regroupent, toujours à titre d'exemple, les principales conditions opératoires (températures et durées) associées à l'invention.

La chair musculaire de boeuf, de mouton, de porc, de volailles, mais aussi de poissons, de crustacés, de mollusques ou de céphalopodes, généralement disponible à une température inférieure à 10°C à coeur, est grossièrement déstructurée pour ne pas endommager les fibres musculaires. Cette opération doit être effectuée sans échauffement excessif (échauffement toléré de 1 à 3 °C maximum à coeur). La chair ainsi déstructurée est ensuite mélangée en continu à un volume précis d'eau. Cet apport d'eau peut être réalisé sous forme liquide, solide (glace, sorbet) ou gazeuse (vapeur). Le ratio (eau / chair) est généralement compris entre 0,5 et 6. La température du mélange (eau + chair) en sortie de la zone de mélange correspond à la température T1. Ensuite, la température du mélange (eau + chair) est ajustée précisément aux températures T2 puis T3, T3 pouvant être égale à T2 et T1 dans certains cas particuliers de l'invention (voir ci-dessous). L'ajustement exact des températures T2 et T3 est essentiel pour permettre le fractionnement des phases liquides lourdes, liquides légères et solides lors de l'étape suivante de l'invention. Dans le cas du traitement thermique UHT, qui est l'une des conditions originales de l'invention, la température T2 est maintenue constante pendant une durée exacte pour garantir une destruction des bactéries pathogènes de référence sous forme végétative ou sporulée. Par exemple, la pasteurisation-pratique est garantie par une destruction de 10¹² à 1 du nombre de cellules végétatives de *Streptococcus feacalis* et la stérilisation-pratique est garantie par la destruction de 10¹² à 1 du nombre de spores de *Clostridium botulinum.* Les procédés de chauffage associés aux températures T2 essentiellement, T3 accessoirement, peuvent être indifféremment le chauffage à l'eau chaude ou à la vapeur, par contact direct ou indirect (échangeur thermique à plaques, tubulaire, à surface raclée, etc.), par double enveloppe à bain d'huile, par induction, micro-ondes, effet joule, effet diélectrique, etc. Les procédés de refroidissement associés aux températures T3 et T4 essentiellement, T2 accessoirement, peuvent être indifféremment le refroidissement indirect à l'eau ou par une solution froide (saumure, eau glycolée, ...) au moyen d'un échangeur thermique traditionnel, voire également un refroidissement par contact direct dans un mélangeur en continu avec un gaz cryogénique comme l'azote liquide ou le gaz carbonique sous forme de neige carbonique. L'avantage du double système de régulation thermique du procédé est de permettre une régulation de grande précision de la température T3 par un ajustement de type chaud / froid. Le mélange (eau + chair) ainsi traité thermiquement est ensuite fractionné en deux parties au minimum par méthode centrifuge, de préférence par décantation centrifuge plutôt que par séparateurs centrifuges à assiettes ou à buses ou bien encore par pression mécanique, de préférence par presse à vis. La première partie correspond à la phase solide du mélange. Elle contient les fibres musculaires et constitue la matrice protéique de l'ingrédient objet de l'invention. Il s'agit en fait principalement des protéines myofibrillaires et des protéines du tissu conjonctif. La deuxième partie est une phase liquide qui contient la matière grasse et l'eau additionnée au mélange initial, dans laquelle ont été entraînées la plupart des protéines sarcoplasmiques du muscle.

**TABLEAU 1 :**

| **LES TEMPERATURES DE CONTROLE DE L'INVENTION** | | | | | | | |
|---|---|---|---|---|---|---|---|
| CONDITION | ETAT DE CUISSON PRODUIT FINI | TYPE | TEMPERATURE INITIALE PRODUIT | TEMPERATURES EN COURS DE PROCEDE | | | |
| | | | | T1 | T2 | T3 | T4 |
| a | cru | standard | - 5 à 10°C | 2 à 15°C | 15 à 45°C | 15 à 45°C | - 5 à 10°C |
| b | cuit | UHT pasteurisé | -5 à 10°C | 2 à 15°C | 65 à 95°C | 15 à 45°C | - 5 à 10°C |
| c | | UHT stérilisé | - 5 à 10°C | 2 à 15°C | 110 å 130°C | 15 à 45°C | - 5 à 10°C |
| d | | UHT stérilisé | - 5 à 10°C | 65 à 130°C | 110 à 130°C | 15 à 45 °C | - 5 à 10°C |
| e | | UHT pasteurisé | - 5 à 10°C | 65 à 95°C | 65 à 95°C | 65 à 95°C | -5 à 10°C |

**TABLEAU 2 :**

| **LES DUREES DE CONTROLE DE L'INVENTION** | | | | | |
|---|---|---|---|---|---|
| CONDITION | TYPE | DUREES DE TRAITEMENT THERMIQUE (en secondes de maintien à Tn à coeur) | | | |
| | | T1 | T2 | T3 | T4 |
| f | standard | 60 à 1 800 s | 60 à 300 s | 60 à 300 s | 60 s |
| g | UHT | 5 s | 5 s | 60 à 300 s | 60 s |
| h | UHT | 60 à 1 800 s | 5 s | 60 à 300 s | 60 s |
| i | standard | 5 s | 60 à 300 s | 60 à 300 s | 60 s |

La phase solide constitue l'ingrédient protéique relatif à la présente invention. Cet ingrédient protéique humide est ensuite rapidement refroidi en dessous de 10°C et peut être conservé quelques heures ainsi pour être utilisé dans une application alimentaire traditionnelle de type charcuterie, plats cuisinés ou produits traiteurs. Il peut être également conditionné en frais en sachet plastique thermoscellé, en présence ou non d'une atmosphère modifiée pour assurer sa conservation. Il peut être congelé dans un surgélateur à plaques, un tunnel à air pulsé ou par contact avec un fluide cryogénique. Il est possible également de le cryoprotéger à la manière d'un surimi de poisson. Ses propriétés fonctionnelles seront ainsi maintenues plus longtemps. Il peut également être ionisé à l'état congelé pour améliorer encore sa qualité microbiologique. Enfin, l'ingrédient protéique humide peut être déshydraté selon différentes techniques classiques (air chaud, atomisation, lyophilisation, ...), avec ou sans un support. Dans le cas où le procédé inclut un traitement thermique UHT, un système de conditionnement aseptique défini selon la réglementation en vigueur permet de garantir la pasteurisation ou la stérilité de l'ingrédient et donc son entreposage à température ambiante pendant plusieurs mois. Dans ce dernier cas, une des originalités de l'invention tient au fait que les protéines myofibrillaires n'ont pas été dénaturées par le procédé UHT, et donc ont conservé 80 % au moins de leur propriété gélifiante d'origine.

### Exemples :

L'Exemple 1 peut être considéré comme étant un cas standard. Il est constitué des opérations technologiques unitaires suivantes (voir schéma figure 1, associé aux conditions de température (a) et de durée de traitement (f) présentées aux tableaux 1 et 2) : déstructuration grossière et douce (1) de la chair musculaire dans un cutter ou un hachoir jusqu'à une granulométrie de l'ordre de 1 à 5 millimètres de diamètre, addition en continu (2) d'une quantité d'eau réfrigérée (ratio eau / chair de 2 / 1), mélange intime par agitation douce pour ne pas déstructurer la masse musculaire et atteindre la température T1, passage (3) et (4) dans deux échangeurs tubulaires (le premier (3) est chauffé pour atteindre la température T2, le second (4) est froid pour atteindre la température T3) pour ajuster exactement la température du mélange à T3 = 35°C, décantation centrifuge dans un appareil de type Westfalia Separator CA 220-03, récupération de la phase solide et refroidissement rapide (6) dans un mélangeur continu avec aspersion de neige carbonique, mise en plaques de 7,5 à 10 kg exactement par une formeuse à vis (chaque plaque est enveloppée d'une poche plastique), congélation dans un surgélateur à plaques pendant deux heures et demi, mise en cartons, entreposage congelé. Les opérations décrites dans cet exemple peuvent être mises en oeuvre à partir de chair de boeuf, mouton, porc, volailles, poissons, crustacés, mollusques ou céphalopodes. Dans cet exemple N°1, le produit fini objet de l'invention est donc un ingrédient protéique humide (70 à 85 % d'humidité) et cru dont la matière sèche est essentiellement constituée de fibres musculaires (c'est à dire à plus de 80 % de protéines myofibrillaires et de protéines du tissu de soutien) et de seulement 25 à 50 % des protéines sarcoplasmiques initiales. Ainsi, 50 % à 75 % environ des protéines sarcoplasmiques solubles dans l'eau et au moins 50 % des graisses initiales ont été éliminées au cours du traitement de centrifugation. Le tableau 3 présente les rendements et la composition biochimique du muscle initial et de l'extrait de fibres musculaires préparé à partir de diverses matières premières d'origine carnée.

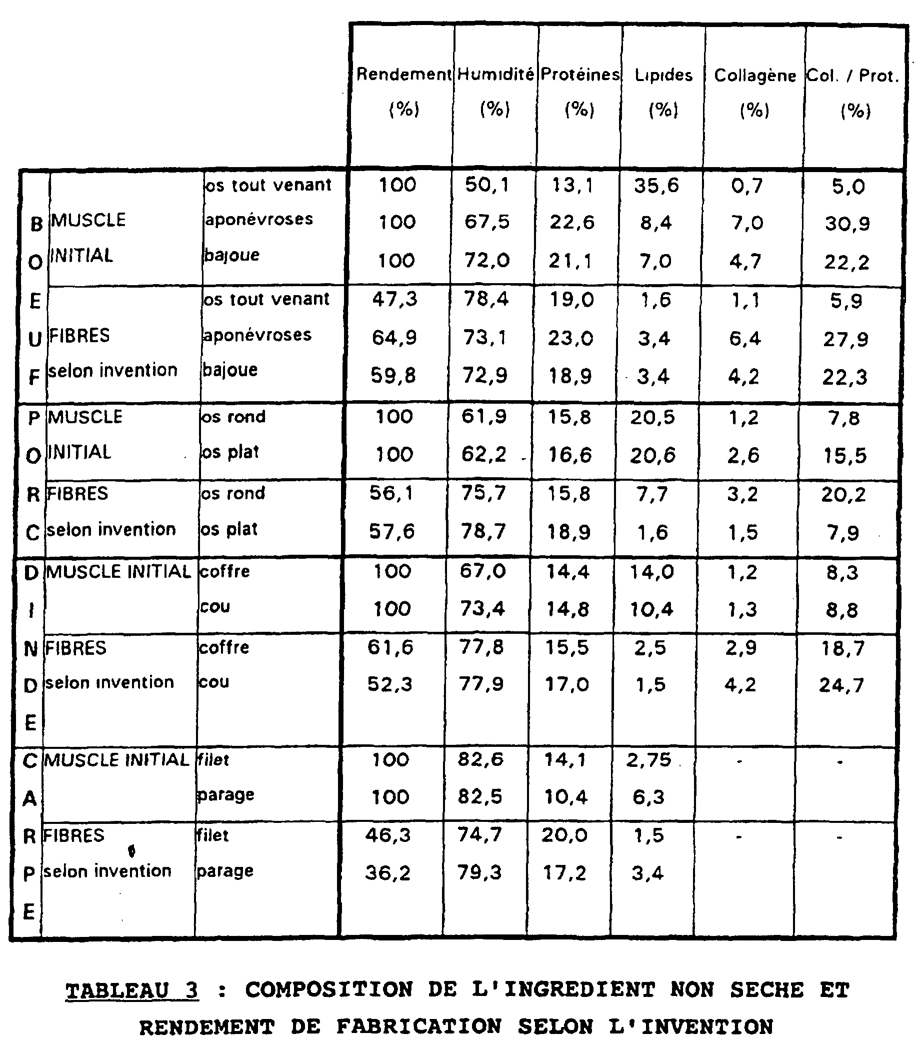

L'Exemple 2 correspond à une application de l'invention à de la chair de dinde. Il se lit en se référant aux mêmes figure et tableaux, mais cette fois les conditions de durée de traitement thermique différent. Elles sont ajustées selon les conditions (g) du tableau 2, c'est à dire que les opérations unitaires de mélange (2) et de chauffage (3) sont réalisées de façon dite « flash », soit pendant une durée de quelques secondes. Cette technique nécessite l'utilisation d'un mélangeur à turbine ou d'un mélangeur dit « statique ». Le traitement thermique est réalisé avec un échangeur classique (tubulaire, à plaques, etc.) ou au moyen d'un appareillage électrique tel qu'un tube à passage de courant, un système ohmique ou à micro-ondes, etc.. La figure 2 illustre ce que peut donner un tel dispositif utilisé pour mettre en oeuvre l'invention. Les propriétés fonctionnelles des fibres musculaires de volaille ainsi recueillies sont maximales, 3 à 5 fois supérieures à celles de la chair initiale. La qualité nutritionnelle de l'ingrédient est élevée, comme le montre le profil d'acides aminés présenté tableau 4. Dans le cas particulier où le mélange (chair + eau) subit un traitement thermique de type UHT dans les conditions (b), (c), (d) ou (e) du tableau 1 garantissant une « pasteurisation pratique » ou une « stérilisation pratique », les protéines de fibres musculaires conservent au moins 80 % des propriétés gélifiantes de l'extrait de fibres musculaires non traité thermiquement, exprimées en force de gel par pénétrométrie (rupture du réseau gélifié avec une sonde sphérique de 3 mm de diamètre). La séparation centrifuge finale est réalisée de préférence à une température T3 relativement basse, inférieure à 45°C.

**TABLEAU 4 :**

| **EXEMPLE DE COMPOSITION EN ACIDES AMINES DE L'EXTRAIT DE FIBRES MUSCULAIRES SELON L'INVENTION APPLIQUEE AU MUSCLE DE DINDE** | |
|---|---|
| ACIDES AMINES TOTAUX | RESULTATS (g/100 g de produit) |
| Lysine | 1,90 |
| Histidine | 0,54 |
| Arginine | 1,42 |
| Acide aspartique | 2,25 |
| Thréonine | 1,00 |
| Sérine | 0,90 |
| Acide glutamique | 3,37 |
| Proline | 0,82 |
| Glycine | 1,00 |
| Alanine | 1,32 |
| Cystéine | 0,18 |
| Valine | 1,02 |
| Méthionine | 0,48 |
| Isoleucine | 1,03 |
| Leucine | 1,68 |
| Tyrosine | 0,77 |
| Phénylalanine | 0,91 |
| Tryptophane | 0,15 |
| TOTAL | 20,74 |

L'Exemple 3 peut être la mise en oeuvre de l'invention sur de la chair de poisson, en l'occurrence du filet de carpe commune. Dans ce cas, les paramètres opératoires préférables correspondent aux conditions (a) et (f) des tableaux 1 et 2. Le rendement du procédé est indiqué dans le tableau 3, ainsi que la composition des matières initiale et finale. Certaines propriétés fonctionnelles comme les pertes en eau à la décongélation, les pertes en eau à la cuisson, le pouvoir gélifiant ainsi que les paramètres de couleur sont présentés tableau 5. Comme on peut le constater encore, les propriétés fonctionnelles de l'extrait de fibres, en particulier le pouvoir gélifiant, sont bien meilleures que celles du muscle initial. Dans ce cas également, on observe un fort éclaircissement de la matière traitée (paramètre de luminance L* amélioré de 17 unités).

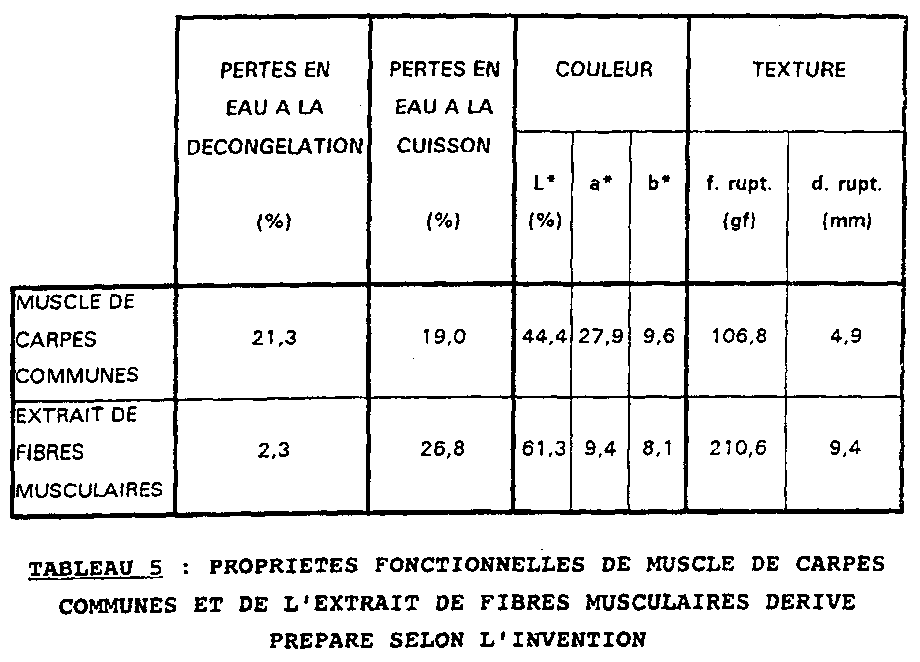

En conséquence, la présente invention a pour caractéristique un procédé de fabrication en continu d'un nouvel ingrédient alimentaire se présentant le plus souvent sous forme hydratée (65 à 90 % d'humidité) et congelée, constitué essentiellement de fibres protéiques musculaires animales, c'est à dire de bovins, d'ovins, de porcins, de volailles (poulet, dinde, canard, lapin, ...), de poissons ou autres produits (crustacés, mollusques, céphalopodes, ...) de la mer et d'aquaculture. Ces fibres, non déstructurées au cours du procédé, sont composées à 70 - 80 % de protéines myofibrillaires insolubles dans l'eau. Elles sont issues, à partir de muscle frais, d'une extraction à l'eau par centrifugation unique des autres protéines musculaires que sont les protéines sarcoplasmiques solubles et des graisses initiales. Cette extraction est réalisée le plus souvent avec 0,5 à 5 volumes d'eau pour un volume de chair musculaire initiale. L'invention comporte un système de régulation thermique fin permettant d'ajuster la température du mélange (eau + chair) à 1°C près entre 15 et 130°C juste avant centrifugation. Le même système autorise le contrôle du temps de traitement thermique à 2 secondes près, ce qui autorise des temps de traitement thermique allant de 5 à 300 secondes. L'invention permet ainsi d'extraire les fibres du muscle sous forme hydratée, crues ou ayant subi un traitement UHT de cuisson, de pasteurisation ou de stérilisation.

L'ingrédient fabriqué selon ce procédé est un extrait de fibres musculaires constitué essentiellement de la fraction protéique musculaire dénommée couramment « protéines myofibrillaires » ou « actomyosine » et qu'il possède de hautes propriétés fonctionnelles par rapport à la matière musculaire initiale, notamment un pouvoir gélifiant 2 à 5 fois supérieur, exprimé en terme de force de gel mesurée par pénétration d'une sonde sphérique de référence. Cet extrait est obtenu par élimination partielle de la fraction protéique musculaire dénommée « protéines sarcoplasmiques » et d'une majorité des matières grasses éventuellement présentes. Le procédé objet de l'invention n'entraîne pas de destruction totale de la structure fibreuse du muscle comme c'est le cas dans les procédés de fabrication des concentrats, isolats ou surimi à partir de muscle. L'élimination des matières grasses lors du procédé de fabrication est un atout supplémentaire qui confère au nouvel ingrédient des propriétés diététiques et nutritionnelles évidentes. Ce point est également renforcé par un aminogramme riche en acides aminés essentiels. Le procédé permet aussi un éclaircissement de la couleur et une neutralisation du goût de l'ingrédient par rapport à la chair musculaire de départ. Le nouvel ingrédient est ainsi particulièrement bien adapté pour la préparation d'aliments comme les charcuteries, les plats cuisinés, les salades, les produits panés et/ou fourrés, etc..

Dans une forme de réalisation, l'ingrédient est sous forme humide et additionné d'agents cryoprotecteurs du type de ceux utilisés pour le surimi de poisson, à savoir des mélanges de glucides comme le saccharose, le glucose, le fructose, le mannitol, le sorbitol, etc., et éventuellement des polyphosphates alimentaires, des sucro-esters, des acides organiques, du sel, etc.. Le mélange cryoprotecteur le plus usuel est un mélange de 48 % de saccharose, 48 % de sorbitol et 4 % de polyphosphates de sodium. Le taux d'incorporation du mélange cryoprotecteur avec l'ingrédient humide, juste avant congélation, peut varier de 5 à 10 %.

Selon une variante, l'ingrédient est déshydraté partiellement (pâte concentrée à 30-50 % d'humidité) ou totalement (poudre à 3-10 % d'humidité) selon des moyens conventionnels (atomisation, tunnel à air chaud, sécheur-cylindre, etc.) ou non (lyophilisation, déshydratation osmotique, séchage sous vide d'air, etc.).

De préférence, cet ingrédient est texturé, c'est à dire qu'il subit un traitement de restructuration physique, chimique et/ou biologique dans le but de lui conférer un structure macroscopique irréversible lui donnant du volume ou une apparence de muscle. La texture finale obtenue peut correspondre à une présentation sous forme de granules de différentes tailles, de flocons, de lanières, de cubes, de rectangles, de morceaux irréguliers, de pièces de grosse taille. Elle peut être uniforme, alvéolaire, expansée, lamellaire, pseudo-fibrée ou réellement fibrée. Les technologies permettant la texturation de cet ingrédient sont, de façon non exhaustive, la gélification, la coagulation, le formage, l'extrusion, la cuisson-extrusion, la polymérisation chimique ou biologique, le filage, la scarification, la granulation, etc. Le produit texturé à partir de l'ingrédient objet de l'invention peut contenir d'autres ingrédients alimentaires sans restreindre le champ de l'invention. Le produit texturé peut être séché selon les technologies décrites ci-dessus.

Dans une forme de mise en oeuvre du procédé de l'invention, on prévoit qu'un additif secondaire est introduit dans le mélange (eau + chair) pour favoriser l'opération d'extraction ou améliorer les propriétés fonctionnelles ou nutritionnelles finales de l'ingrédient. Parmi les additifs potentiels, on trouve : le sel (NaCl), la bicarbonate de sodium, le chlorure de sodium (CaCl₂), l'acide citrique, etc..

On peut encore prévoir la mise en oeuvre, soit avant séparation centrifuge (voie humide), soit sur le produit fini après séparation centrifuge, d'une opération de raffinage, c'est à dire d'un tamisage de l'extrait de fibres musculaires à travers un tamis de perforations de l'ordre de 0,5 à 2 mm de diamètre.

En outre, le procédé peut être précédé ou suivi de toutes opérations technologiques complémentaires susceptibles de modifier les propriétés fonctionnelles ou nutritionnelles de l'ingrédient, en particulier des traitements successifs de lavages et d'essorages selon le procédé de fabrication du surimi de poisson.

L'installation pour la mise en oeuvre du procédé selon l'invention comprend un appareil de déstructuration douce, tel qu'une trémie et gaveur continus 8 avec une entrée 9 de chair musculaire.

A la sortie de l'appareil 7 est branchée une alimentation d'eau 10, l'ensemble étant raccordé à un mélangeur statique 11. La sortie du mélangeur 11, à laquelle est assujettie une sonde 12 de mesure de la température T1, débouche dans un dispositif de chauffage 13 à une température T2, par exemple un échangeur thermique tubulaire chambreur double enveloppe comportent une entrée de vapeur 14. Une sonde 15 mesure la température T2 à la sortie du dispositif 13, cette sortie débouchant dans un appareil de refroidissement 16, par exemple un échangeur thermique à plaques comportant une entrée d'eau glycolée 17. Une sonde 18 mesure la température T3 à la sortie de l'appareil 16, qui débouche dans un appareil de fractionnement centrifuge 19, par exemple un décanteur centrifuge comportant une sortie 20 pour la phase liquide ou une presse a vis sans fin. La phase solide est envoyée sur un mélangeur continu 21 muni d'une entrée 22 de neige carbonique. Une sonde 23 mesure la température T4 à la sortie 24 du mélangeur 21 par laquelle sort l'ingrédient selon l'invention. L'échangeur thermique 16 peut être complété par un second échangeur. L'opération de fractionnement obtenue par centrifugation peut également être réalisée par pressage mécanique, par exemple à l'aide d'une presse à vis.

Le dispositif décrit ci-dessus est un exemple de réalisation de l'invention particulièrement développé. L'invention n'est en aucun cas contournée si l'une ou la totalité des opérations unitaires la constituant sont réalisées par des équipements plus simples, comme notamment un système de cuves et de pompes.

L'invention porte également sur des compositions alimentaires comportant au moins un ingrédient selon l'invention.

## Revendications

1. Procédé de fabrication d'un ingrédient alimentaire naturel et gélifiant constitué de protéines de fibres musculaires à base de chair musculaire carnée ou de chair musculaire de poissons, crustacés, mollusques ou céphalopodes, **caractérisé en ce que** :
a) on soumet la chair musculaire à une déstructuration douce pour obtenir des particules ayant une dimension d'au moins 1 mm de manière à ne pas endommager les fibres musculaires,
b) on mélange en continu la chair musculaire ainsi déstructurée à un volume précis d'eau, le ratio (eau/chair) étant compris entre 0,5 et 6, pendant une durée de temps de 5 à 1800 secondes pour obtenir un mélange sortant à une température (T1) dans la plage de 2 à 15°C,
c) on ajuste la température du mélange à au moins une température précise prédéterminée (T3) dans la plage de 15 à 45°C, et on maintient le mélange à ladite température prédéterminée pendant une durée de temps de 60 à 300 secondes,
d) on soumet le mélange ainsi traité thermiquement à un fractionnement centrifuge ou par pression mécanique de manière à recueillir la phase solide et,
e) on refroidit rapidement la phase solide recueillie pendant une durée de temps d'environ 60 secondes à une température (T4) inférieure à 10°C pour produire un ingrédient alimentaire naturel et gélifiant contenant 70% à 80% de fibres protéiniques myofibrillaires non dénaturées.

2. Procédé selon la revendication 1,
**caractérisé en ce qu'**on ajuste en outre la température du mélange entre les étapes b) et c) à une température prédéterminée (T2) dans la plage de 65°C à 130°C et on maintient le mélange à ladite température pendant une durée de temps suffisante pour correspondre à un traitement thermique UHT de pasteurisation ou de stérilisation.

3. Procédé selon l'une des revendications 1 et 2,
**caractérisé en ce qu'**on introduit dans le mélange de chair et d'eau au moins un additif destiné à favoriser l'opération de fractionnement et/ou améliorer les propriétés fonctionnelles et/ou nutritionnelles de l'ingrédient alimentaire.

4. Procédé selon l'une des revendications 1 à 3,
**caractérisé en ce qu'**on déshydrate partiellement ou totalement l'ingrédient alimentaire obtenu.

5. Procédé selon l'une des revendications 1 à 4,
**caractérisé en ce qu'**on met en oeuvre, soit avant l'opération de fractionnement dans le cas d'un procédé par voie humide, soit sur le produit fini après fractionnement, une opération de raffinage par tamisage.

6. Procédé selon l'une des revendications 1 à 5,
**caractérisé en ce qu'**il est précédé ou suivi d'au moins un traitement technologique complémentaire connu en soi destiné à modifier les propriétés fonctionnelles et/ou nutritionnelles de l'ingrédient, en particulier des traitements successifs de lavages et d'essorages.

7. Procédé selon l'une des revendications 1 à 6,
**caractérisé en ce qu'**on fait subir à l'ingrédient à un traitement de restructuration physique, chimique et/ou biologique.

8. Installation pour la mise en oeuvre du procédé selon l'une des revendications 1 à 7,
**caractérisé en ce qu'**elle comprend un appareil de déstructuration douce (8), une amenée d'eau (10) à la sortie dudit appareil (8) débouchant dans un dispositif de chauffage (13) à une température précise prédéterminée (T3) par l'intermédiaire d'un mélangeur statique (11), la sortie dudit dispositif de chauffage (13) débouchant dans un appareil de fractionnement centrifuge (19) dont la sortie de phase solide débouche dans un mélangeur continu (24).

9. Installation selon la revendication 8,
**caractérisée en ce qu'**elle comprend entre l'amenée d'eau (10) à la sortie de l'appareil de déstructuration douce (8) et l'appareil de fractionnement centrifuge (19), un dispositif de chauffage (13) à une température précise prédéterminée (T2) et un dispositif de refroidissement (16) à la température précise prédéterminée (T3).

10. Ingrédient alimentaire obtenu par le procédé selon l'une des revendications 1 à 7,
**caractérisé en ce qu'**il est constitué essentiellement de fibres protéiques animales non déstructurées, en particulier d'une proportion élevée (de 70 à 80%) de protéines myofibrillaires insolubles dans l'eau.

11. Ingrédient alimentaire selon la revendication 10,
**caractérisé en ce qu'**il est frais.

12. Ingrédient alimentaire selon la revendication 10,
**caractérisé en ce qu'**il est congelé.

13. Ingrédient alimentaire selon la revendication 10,
**caractérisé en ce qu'**il est cryoprotégé.

14. Ingrédient alimentaire selon la revendication 10,
**caractérisé en ce qu'**il est ionisé à l'état congelé.

15. Ingrédient alimentaire selon la revendication 10,
**caractérisé en ce qu'**il est déshydraté avec ou sans un support.

16. Ingrédient alimentaire selon l'une des revendications 10 à 15,
**caractérisé en ce qu'**il a subi un traitement thermique UHT.

17. Préparation alimentaire,
**caractérisée en ce qu'**elle contient au moins un ingrédient alimentaire selon l'une des revendications 10 à 16.

## Patentansprüche

1. Verfahren zur Herstellung eines natürlichen und gelierenden Nahrungszusatzmittels, bestehend aus Muskelfaserproteinen auf der Basis von Muskelfleisch von warmblütigen Tieren oder von Muskelfleisch von Fischen, Krustentieren, Weichtieren oder Kopffüßern, **dadurch gekennzeichnet, daß**:
a) das Muskelfleisch einer schonenden Destrukturierung unterzogen wird, um Partikel mit einer Größe von wenigstens 1 mm zu erhalten, wobei die Muskelfasern nicht beschädigt werden,
b) das so destrukturierte Muskelfleisch im Durchlaufverfahren mit einem präzisen Wasservolumen vermischt wird, wobei das Mischungsverhältnis (Wasser/Fleisch) zwischen 0,5 und 6 liegt, während einer Zeitdauer von 5 bis 1800 Sekunden, so daß man ein austretendes Gemisch mit einer Temperatur (T1) im Bereich von 2 bis 15°C erhält,
c) die Temperatur des Gemisches auf wenigstens eine vorbestimmte präzise Temperatur (T3) im Bereich von 15 bis 45°C eingestellt und das Gemisch während einer Zeitdauer von 60 bis 300 Sekunden auf der besagten Temperatur gehalten wird,
d) das so wärmebehandelte Gemisch einer Fraktionierung durch Zentrifugieren oder durch mechanischen Druck unterzogen wird, um die Feststoffphase aufzunehmen, und
e) die so aufgenommene Feststoffphase schnell während einer Zeitdauer von etwa 60 Sekunden auf eine Temperatur (T4) unter 10°C abgekühlt wird, um ein natürliches und gelierendes Nahrungszusatzmittel zu erzeugen, das 70% bis 80% nicht denaturierte myofibrilläre Faserproteine enthält.

2. Verfahren nach Anspruch 1, **dadarch gekennzeichnet,** daß außerdem die Temperatur des Gemisches zwischen den Schritten b) und c) auf eine vorbestimmte Temperatur (T2) im Bereich von 65°C bis 130°C eingestellt und das Gemisch während einer ausreichenden Zeitdauer auf der besagten Temperatur gehalten wird, um einer UHT-Wärmebehandlung mit Pasteurisierung oder Sterilisation zu entsprechen.

3. Verfahren nach einem der Ansprüche 1 und 2,
**dadurch gekennzeichnet, daß** in das Gemisch aus Fleisch und Wasser wenigstens ein Zusatzstoff hineingegeben wird, der dazu bestimmt ist, den Fraktioniervorgang zu fördern und/oder die funktionellen und/oder ernährungstechnischen Eigenschaften des Nahrungszusatzmittels zu verbessern.

4. Verfahren nach einem der Ansprüche 1 bis 3,
**dadurch gekennzeichnet, daß** das erhaltene Nahrungszusatzmittel teilweise oder vollständig entwässert wird.

5. Verfahren nach einem der Ansprüche 1 bis 4,
**dadurch gekennzeichnet, daß** entweder vor dem Fraktioniervorgang im Falle eines Feuchtverfahrens oder am Endprodukt nach der Fraktionierung ein Raffinationsvorgang durch Sieben erfolgt.

6. Verfahren nach einem der Ansprüche 1 bis 5, **dadurch gekennzeichnet, daß** ihm wenigstens eine an sich bekannte zusätzliche technologische Behandlung vor- oder nachgeschaltet ist, die dazu bestimmt ist, die funktionellen und/oder ernährungstechnischen Eigenschaften des Zusatzmittels zu verändern, insbesondere Wasch- und Trocknungsnachbehandlungen.

7. Verfahren nach einem der Ansprüche 1 bis 6,
**dadurch gekennzeichnet, daß** das Zusatzmittel einer physikalischen, chemischen und/oder biologischen Restrukturierungsbehandlung unterzogen wird.

8. Anlage zur Anwendung des Verfahrens nach einem der Ansprüche 1 bis 7, **dadurch gekennzeichnet, daß** sie ein Gerät zur schonenden Destrukturierung (8) und eine Wasserzuleitung (10) am Auslaß des besagten Geräts (8) umfaßt, der über einen statischen Mischer (11) in eine Heizvorrichtung (13) zur Erhitzung auf eine vorbestimmte präzise Temperatur (T3) mündet, wobei der Auslaß der besagten Heizvorrichtung (13) in ein Gerät zur Zentrifugalfraktionierung (19) mündet, dessen Feststoffphasen-Auslaß in einen Durchlaufmischer (24) mündet.

9. Anlage nach Anspruch 8, **dadurch gekennzeichnet, daß** sie zwischen der Wasserzuleitung (10) am Auslaß des Geräts zur schonenden Destrukturierung (8) und dem Gerät zur Zentrifugalfraktionierung (19) eine Heizvorrichtung (13) zur Erhitzung auf eine vorbestimmte präzise Temperatur (T2) und eine Kühlvorrichtung (16) zur Abkühlung auf eine vorbestimmte präzise Temperatur (T3) umfaßt.

10. Nahrungszusatzmittel, hergestellt durch das Verfahren nach einem der Ansprüche 1 bis 7, **dadurch gekennzeichnet, daß** es im wesentlichen aus nicht destrukturierten tierischen Faserproteinen besteht, insbesondere mit einem hohen Anteil (70 bis 80%) von in Wasser unlöslichen Myofibrillarproteinen.

11. Nahrungszusatzmittel nach Anspruch 10,
**dadurch gekennzeichnet, daß** es frisch ist.

12. Nahrungszusatzmittel nach Anspruch 10,
**dadurch gekennzeichnet, daß** es tiefgekühlt ist.

13. Nahrungszusatzmittel nach Anspruch 10,
**dadurch gekennzeichnet, daß** es durch Tieftemperaturbehandlung geschützt ist.

14. Nahrungszusatzmittel nach Anspruch 10,
**dadurch gekennzeichnet, daß** es im tiefgekühlten Zustand ionisiert ist.

15. Nahrungszusatzmittel nach Anspruch 10,
**dadurch gekennzeichnet, daß** es mit oder ohne Träger entwässert ist.

16. Nahrungszusatzmittel nach einem der Ansprüche 10 bis 15,
**dadurch gekennzeichnet, daß** es eine UHT-Wärmebehandlung durchlaufen hat.

17. Nahrungsmittelzubereitung,
**dadurch gekennzeichnet, daß** sie wenigstens ein Nahrungszusatzmittel nach einem der Ansprüche 10 bis 16 enthält.

## Claims

1. A method for the production of a natural and gelling food ingredient consisting of muscle fibre proteins based on meat muscle flesh or muscle flesh of fish, crustaceans, molluscs or cephalopods, **characterised in that**:
a) the muscle flesh is subjected to gentle destructuring in order to obtain particles having a size of at least 1 mm in such a way as not to damage the muscle fibres,
b) the muscle flesh thus destructured is mixed continuously into a precise volume of water, the (water/flesh) ratio being between 0.5 and 6, for a period of time of 5 to 1800 seconds in order to obtain a mixture leaving at a temperature (T1) in the range from 2 to 15 °C,
c) the temperature of the mixture is adjusted to at least one precise predetermined temperature (T3) in the range from 15 to 45 °C and the mixture is kept at the said predetermined temperature for a period of time of 60 to 300 seconds,
d) the mixture subjected to a heat treatment in this way is subjected to centrifugal fractionation or fractionation by mechanical pressure so as to collect the solid phase and
e) the solid phase collected is cooled rapidly for a period of time of approximately 60 seconds at a temperature (T4) below 10 °C to produce a natural and gelling food ingredient containing 70% to 80% non-denatured myofibrillar protein fibres.

2. A method according to Claim 1,
**characterised in that** the temperature of the mixture is also adjusted between steps b) and c) to a predetermined temperature (T2) in the range from 65 °C to 130 °C and the mixture is kept at the said temperature for a sufficient period of time to correspond to a pasteurisation or sterilisation UHT heat treatment.

3. A method according to one of Claims 1 and 2,
**characterised in that** at least one additive intended to promote the fractionation operation and/or to improve the functional and/or nutritional properties of the food ingredient is introduced into the mixture of flesh and water.

4. A method according to one of Claims 1 to 3,
**characterised in that** the food ingredient obtained is partially or completely dehydrated.

5. A method according to one of Claims 1 to 4,
**characterised in that** a refining operation by means of sieving is carried out, either before the fractionation operation in the case of a method by a wet route or on the end product after fractionation.

6. A method according to one of Claims 1 to 5,
**characterised in that** it is preceded or followed by at least one complementary technological treatment known per se intended to modify the functional and/or nutritional properties of the ingredient, in particular by successive washing and drying treatments.

7. A method according to one of Claims 1 to 6,
**characterised in that** to (sic) the ingredient is subjected to a physical, chemical and/or biological restructuring treatment.

8. An installation for carrying out the method according to one of Claims 1 to 7,
**characterised in that** it comprises a gentle destructuring apparatus (8), a water feed (10) at the outlet of the said apparatus (8) opening into a heating device (13) at a precise predetermined temperature (T3) via a static mixer (11), the outlet of the said heating device (13) opening into a centrifugal fractionation apparatus (19), the solid phase outlet of which opens into a continuous mixer (24).

9. An installation according to Claim 8,
**characterised in that** it contains a heating device (13) at a precise predetermined temperature (T2) and a cooling device (16) at the precise predetermined temperature (T3) between the water feed (10) at the outlet of the gentle destructuring apparatus (8) and the centrifugal fractionation apparatus (19).

10. A food ingredient obtained by the method according to one of Claims 1 to 7,
**characterised in that** it essentially consists of non-destructured animal protein fibres, in particular of a high proportion (from 70 to 80 %) of water-insoluble myofibrillar proteins.

11. A food ingredient according to Claim 10,
**characterised in that** it is fresh.

12. A food ingredient according to Claim 10,
**characterised in that** it is frozen.

13. A food ingredient according to Claim 10,
**characterised in that** it is cryoprotected.

14. A food ingredient according to Claim 10,
**characterised in that** it is ionised in the frozen state.

15. A food ingredient according to Claim 10,
**characterised in that** it is dehydrated with or without a carrier.

16. A food ingredient according to one of Claims 10 to 15,
**characterised in that** it has been subjected to a UHT heat treatment.

17. A food preparation,
**characterised in that** it contains at least one food ingredient according to one of Claims 10 to 16.
